# EUROPÄISCHE PATENTSCHRIFT

(11) **EP 0 766 511 B1**
(45) Veröffentlichungstag und Bekanntmachung des Hinweises auf die Patenterteilung: **18.01.2006**
(21) Anmeldenummer: 95921794.4
(22) Anmeldetag: 31.05.1995
(51) Int. Cl.: A01L 3/02

(54) **LAUFSCHUTZ FÜR PFERDEHUFE**
PROTECTION FOR HORSES' HOOVES
PROTECTION POUR SABOTS DE CHEVAUX

(30) Priorität: 31.05.1994 US 251485
(43) Veröffentlichungstag der Anmeldung: 09.04.1997
(73) Patentinhaber: Stübbe, Peter, 23554 Lübeck (DE)
(72) Erfinder: Stübbe, Peter, 23554 Lübeck (DE)
(86) Internationale Anmeldenummer: PCT/EP1995/002070
(87) Internationale Veröffentlichungsnummer: WO 1995/032619

(56) Entgegenhaltungen:
- DE-A- 2 316 573
- DE-A- 2 638 970
- DE-A- 3 406 733
- GB-A- 2 018 559
- US-A- 3 236 310
- US-A- 4 765 411
- US-A- 5 203 415

## Beschreibung

Die Erfindung betrifft einen Laufschutz der im Oberbegriff des Anspruches 1 genannten Art (siehe DE-A-2316573).

Bei bekannten Konstruktionen dieser Art ist die Kunststoffschicht Teil eines Befestigungssystemes für eine unter der Hufsohle angeordnete Kunststoffsohle, die an der Kunststoffschicht mit nach oben ragenden, am Rand vorgesehenen Aufzügen befestigt ist. Die Kunststoffschicht ist dabei aus elastischem, nicht formsteifem Kunststoff ausgebildet, der mit der Außenfläche der Hornwand über eine Klebeschicht verbunden ist, die beispielsweise aus Sekundenkleber oder thermoplastischem Schmelzkleber besteht, wie dies in der beschrieben ist.

Bekannt ist ferner aus dem Stand der Technik die Verwendung eines aus mehreren Komponenten gemischten, unmittelbar auf dem Horn des Hufes abbindenden Kunstsloffmateriales, das formsteif aushärtet. Dieses Material wird nach dem Stand der Technik zur Reparatur beschädigter Hufe verwendet. Es wird dazu verwiesen auf das Produkt
Grand Circuit
Acrylik Hoof Repair Systems
der Firma Across The Anvil East, Anvil, USA
sowie auf das Produkt
Equilox
der Firma Innovative Animal Products,
Rochester, USA.

Diese Materialien auf der Basis von Polymethylmethacrylat haben die Eigenschaft, auf dem Horn des Hufes mit hoher Festigkeit bindend formsteif mit einer etwa dem Horn entsprechenden Härte auszuhärten. Sie werden nach dem Stand der Technik zu Reparaturen des Hornes verwendet, also beispielsweise zum Füllen ausgebroclener Hornstücke. Dieses Material bildet mit dem Horn eine homogene Einheit und läßt sich zusammen mit diesem durch Raspeln oder Schneiden bearbeiten, läßt sich Nageln etc.

Mit der vorliegenden Erfindung gemäß Anspruch 1 wird mit Hilfe dieses Materiales ein Laufschutz für Pferdehufe geschaffen, der hervorragende, bisher im Stand der Technik unbekannte Eigenschaften hat.

Die Beschichtung der Außenfläche der Hornwand mit diesem bisher nur für Reparaturzwecke verwendeten Material ergibt in Form einer korsettartigen Außenarmierung eine Verstärkung des Hufes gegen starke Deformationen bei hoher Belastung. Das übermäßige Aufweiten des Hufes bei solchen Belastungen wird verhindert. Die Schicht wirkt außerdem schützend gegen punktförmige Belastungen des Hufes, z.B. beim Auftreten auf einen spitzen Stein, und verhindert das punktuelle Ausbrechen von Hufteilen. Die Schicht bietet ferner die Möglichkeit, den Huf abriebfester zu machen, wenn die Schicht mit ihrer Unterkante einen Teil der Aufstandsfläche des Hufes bildet oder wenn sie zum Haltern einer unter dem Huf getragenen Sohle dient.

Vorteilhaft sind die Merkmale des Anspruches 2 vorgesehen. Eine Schichtdicke in diesem Bereich wird bevorzugt und führt zu einer erheblichen Verbesserung der Huffestigkeit.

Vorteilhaft sind die Merkmale des Anspruches 3 vorgesehen. Die Schicht kann dann mit dem Huf nach unten wachsen und durch Abrieb auf dem Boden oder durch von Zeit zur Zeit zur Wiederherstellung der ursprünglichen Hufform erforderliches Zurückschneiden des Hufes gekürzt werden; behält dabei aber die erforderliche Dicke bei. Es ist also erst nach längerer Laufzeit, wenn die Hornwand des Hufes im wesentlichen über die Höhe der ursprünglich aufgebrachten Schicht nach unten gewachsen ist, eine erneute Aufbringung der Schicht erforderlich.

Vorteilhaft sind die Merkmale des Anspruches 4 vorgesehen. Eine solche in Segmente unterteilte Ausführung der Schicht verringert ihre dem Huf Halt und Stabilität, z.B. gegen Ausbrechen, gebende Wirkung nur unwesentlich und bietet den Vorteil einer profilierten Hufaußenform, die für besseren Halt auf losem Untergrund sorgt oder in vorteilhafter Weise einen Umfangsformschluß mit einer an der Schicht getragenen Sohle ermöglicht.

Vorteilhaft sind die Merkmale des Anspruches 5 vorgesehen. Eine solche Schicht aus abriebfestem Material, die bis auf den Boden reicht, also die Aufstandsfläche des Hufes zumindest teilweise ausbildet, verringert wirksam den Abrieb des Hornmateriales des Hufes und sorgt somit auch bei hoher Laufbelastung des Hufes dafür, daß der Huf selbst nicht zu stark verschleißt. Ohne Schutz des Hufes mit einem Eisen oder einer Kunststoffsohle kann das Pferd mit im wesentlichen naturbelassenem Laufgefühl, also mit freier Sohle unter hoher Laulbelastung genutzt werden.

Alternativ dazu kann gemäß Anspruch 6 die Schicht zur Formschlußverbindung mit einer unter dem Huf angeordneten Kunststoffsohle vorgesehen sein, wobei die Formschlußverbindung vorteilhaft gemäß Anspruch 7 lösbar ausgebildet ist. Auf diese Weise kann eine den Huf schützende Sohle in einfacher und wirkungsvoller Weise am Huf gehalten werden.

Vorteilhaft sind dabei die Merkmale des Anspruches 8 vorgesehen, die durch den Umfangsformschluß zwischen den nach oben ragenden Aufzügen der Kunststoffsohle und den Segmenten der Schicht eine hervorragende Verdrehsicherung der Sohle am Huf schaffen, wodurch das gefürchtete Abreißen der Sohle durch Drehbewegung des aufgestellten Hufes verhindert wird.

Vorteilhaft kann auch gemäß Anspruch 9 die Schicht selbst einstückig unter die Hufsohle greifend als Kunststoffsohle ausgebildet sein, wodurch eine besonders einfach am Huf anbringbare hochfeste Laufschutzkonstruktion geschaffen wird, die einen besonders wirksamen Schutz des Hufes bildet.

Vorteilhaft sind die Merkmale des Anspruches 10 vorgesehen. Diese bei allen vorgenannten Ausführungsformen der Erfindung anwendbare Konstruktion mit eingebetteten Metallstiften kann durch die Metallstifte eine Erhöhung der Abriebfestigkeit und guten Eingriff mit dem Untergrund, auf dem das Pferd läuft, verschaffen.

Gemäß Anspruch 11 ist es auch möglich, die Schicht zur Befestigung eines konventionellen Hufeisens durch Nageln in die Schicht hinein zu verwenden. Dadurch kann in üblicher konventioneller Technik das Pferd beschlagen werden, ohne die Nachteile der Beschädigungsgefahr des Hufes durch das Nageln befürchten zu müssen.

In den Zeichnungen ist die Erfindung beispielsweise und schematisch dargestellt. Es zeigen:
- Fig. 1: einen erfindungsgemäßen Laufschutz einer ersten Ausführungsform in Seitenansicht auf einen Pferdehuf,
- Fig. 2: die Konstruktion der Fig. 1 in Ansicht von unten,
- Fig. 3: in Darstellung gemäß Fig. 1 eine zweite Ausführungsform,
- Fig. 4: die Ausführungsform der Fig. 3 in Ansicht von unten,
- Fig. 5: in Ansicht gemäß Fig. 1 eine dritte Ausführungsform,
- Fig. 6: einen Schnitt nach Linie 6 - 6 in Fig. 5,
- Fig. 7: in einem Schnitt gemäß Fig. 6 eine vierte Ausführungsform,
- Fig. 8: in einem Schnitt gemäß Fig. 6 eine fünfte Ausführungsform und
- Fig. 9: in einem Schnitt gemäß Fig. 6 eine sechste Ausführungsform des erfindungsgemäßen Laulschutzes.

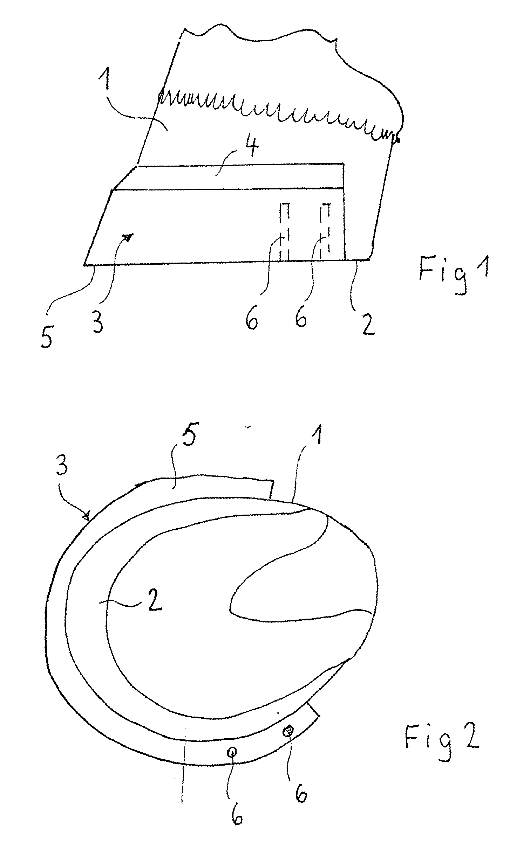

Die Fig. 1 und 2 zeigen in Seienansicht und in Ansicht von unten auf die Sohle einen Pferdehuf mit der Außenfläche 1 der Hornwand und dem in Fig. 2 ersichtlichen Sohlenrand 2 der Hornwand. Der dargestellte Laufschutz besteht aus einer Schicht 3 eines Kunststoffmateriales, das aus zwei oder mehr Komponenten flüssig angemischt in einer geeigneten, nicht dargestellten Gießform auf die Außenfläche 1 aufgebracht wird und aufgrund seiner chemischen Eigenschaften dort mit sehr fester Haftung aushärtet und im ausgehärteten Zustand formsteif ist mit Materialeigenschaften, die etwa dem des natürlichen Hornes des Hufes entsprechen.

Solche Materialien sind beispielsweise auf Basis von Polymethylmethacrylat verfügbar. Sie werden beispielsweise angeboten unter der Markenbczcichnung "Equilox" von der Firma Innovative Animal Products in Rochester, USA, oder als "Grand Circuit Acrylic Hoof Repair Systems" von der Firma Across The Anvil East in Anvil, USA. Diese Materialien haben sich bisher schon bewährt zu Reparaturzwecken, also zum Füllen von ausgebrochenen Löchern und Rissen in einem beschädigten Huf.

Wie die Fig. 1 und 2 zeigen, ist bei der dargestellten ersten Ausführungsform des erfindungsgemäßen Laufschutzes die Schicht 3 im wesentlichen um den Umfang der Außenfläche 1 der Hornwand umlaufend als durchgehende Beschichtung angebracht. Die Höhe der Beschichtung verläuft im dargestellten Ausführungsbeispiel über etwa zwei Drittel der Höhe der Außenfläche 1 und ist am oberen Rand mit einer Abschrägung 4 versehen, die ein Verhaken beispielsweise bei Berührung der Hufe untereinander verhindert. Die Unterkante 5 der Schicht 3 liegt im Ausführungsbeispiel bündig mit dem Sohlenrand 2 der Hornwand des Hufes und ergibt mit dieser eine verbreiterte hufeisenförmige Aufstandsfläche des Hufes.

Die Schichtdicke beträgt etwa 4 bis 10 mm, liegt also in der Größenordnung der Breite des Sohlenrandes 2.

Im Ausführungsbeispiel der Fig. 1 und 2 ist das Material der Schicht 3 beispielsweise durch geeignete Zuschlagstoffe abriebfest ausgebildet, wobei die Abriebfestigkeit vorzugsweise etwa in der Größenordnung der Abriebfestigkeit des Hornmateriales des Hufes am Sohlenrand 2 liegt.

Läuft das Pferd mit dem in den Fig. 1 und 2 dargestellten Laufschutz, so verteilt sich die Abriebbelastung auf den Sohlenrand 2 und auf die Unterkante 5 der Schicht 3. Wenn vorzugsweise die Schicht 3 etwas abriebfester ist als das Hornmaterial des Hufes, so wird bei hohen Abriebbelastungen, beispielsweise bei hohen Laufleistungen des Pferdes auf festem Untergrund, eine übermäßige Abnutzung des Sohlenrandes 2 vermieden. Das Pferd kann also mit einem solchen Laufschutz ohne übermäßige Abnutzung des Hufes hohe Laufleistungen erreichen, ohne daß dazu ein Sohlenschutz aus Fremdmaterial unter der Hufsohle erforderlich wäre. Das Pferd kann mit weitgehend naturbelassenem Huf laufen, ohne daß der Huf zu stark abnutzt.

Die Schicht 3 gibt dem Huf außerdem einen Schutz gegen übermäßig punktuelle Belastungen, beispielsweise beim Auftreten auf einen spitzen Stein. Es wird dadurch das punktuelle Ausbrechen von Teilen des Sohlenrandes 2 verhindert. Außerdem wird ein übermäßiges Aufweiten des Hufes bei hoher Aufstandsbelastung vermieden, was zu Hufschäden führen kann.

Wie die Fig. 1 und 2 zeigen, können in der Schicht 3 Metallstifte 6 eingebettet sein, die die Unterkante 5 der Schicht 3, also die Aufstandsfläche, überragen können oder, wie dargestellt, bündig mit dieser enden können. Die Metallstifte 6 verbessern die Abriebfestigkeit und können einen Rutschschutz bei glattem Untergrund ergeben.

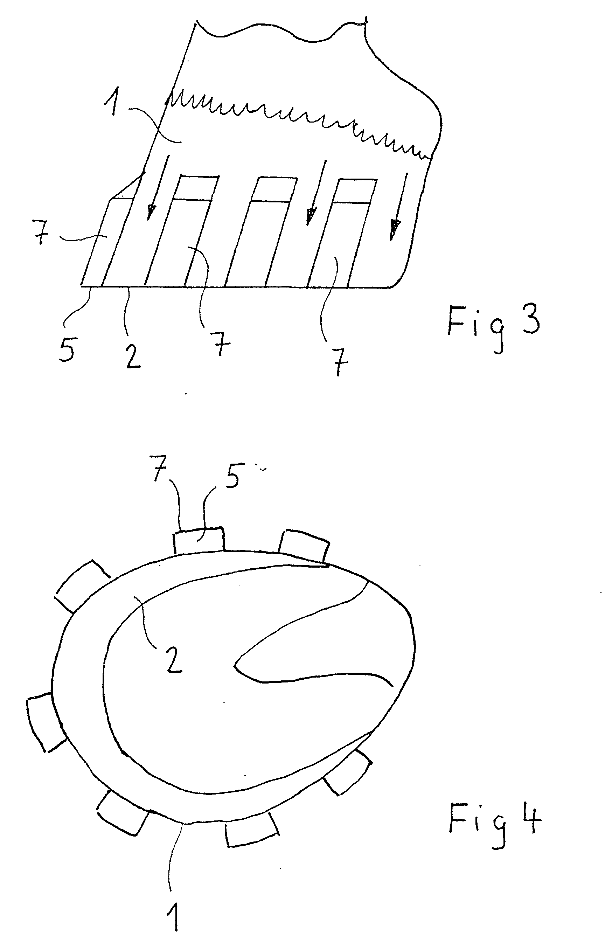

Die Fig. 3 und 4 zeigen in Darstellung gemäß den Fig. 1 und 2 eine Ausführungsvariante der vorgenannten Konstruktion, bei der dasselbe Material wie bei den Ausführungsformen der Fig. 1 und 2 etwa in derselben Schichtdicke in Beschichtung auf der Außenfläche 1 der Hornwand vorgesehen ist, jedoch in Form von umfangsbeabstandeten Segmenten 7, die sich über die Höhe der Hornwand 3 erstrecken und im Umfangsabstand angeordnet sind. Die Segmente 7 ergeben wiederum mit ihrer Unterkante 5 eine verschleißmindernde Vergrößerung der Aufstandsfläche und dienen zum Abriebschutz für die Sohlenwand 2. Aufgrund der durch die Segmente 7 sich ergebenden Umfangsprofilierung des Randes der insgesamt sich ergebenden Aufstandsfläche wird dem Pferd ein rutschsicherer Tritt in weichem Untergrund ermöglicht. Die Segmente 7 ergeben außerdem eine Versteifung der Hornwand und verhindern in ähnlicher Weise wie die Schicht 3 der Ausführungsform der Fig. 1 und 2 das Ausbrechen der Hornwand bei Punktbelastungen.

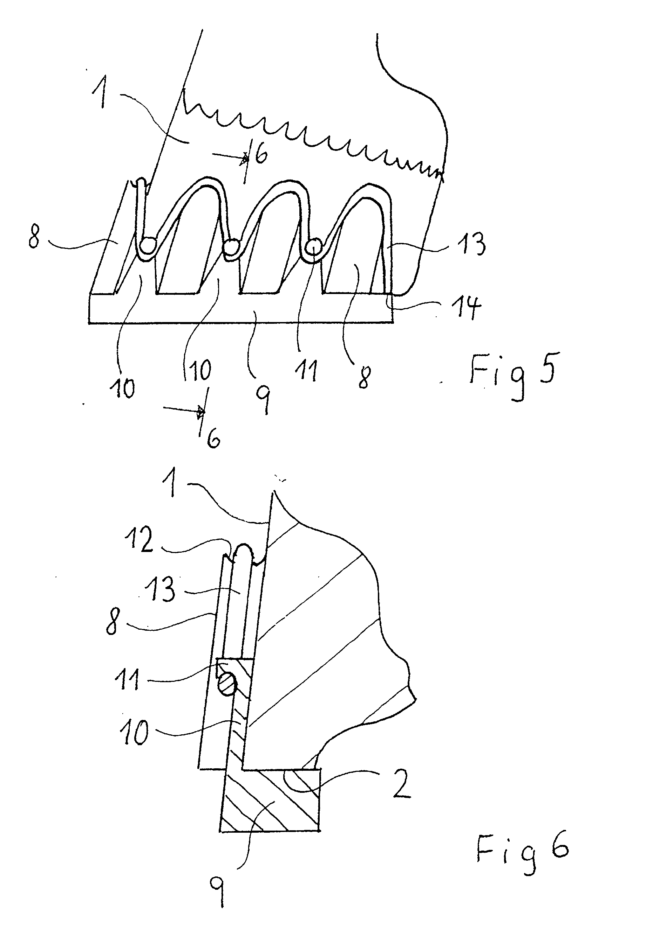

Die Fig. 5 und 6 zeigen eine andere Ausführungsform, bei der Segmente 8 vorgesehen sind, die ähnlich ausgebildet sind wie die Segmente 7 der Ausführungsform der Fig. 3 und 4. Die Segmente 8 ergeben wiederum die gewünschte Aussteifung des Hufes gegen zu starke Belastungen und gegen Ausbrechen bei punktueller Belastung, dienen bei dieser Ausführungsform im wesentlichen aber zum Halten einer aus geeignetem Material gefertigten Kunststoffsohle 9, die hufeisenförmig ausgebildet unter dem Sohlenrand 2 des Hufes sitzt und seitlich mit aufragenden Aufzügen 10 formschlüssig in die Lücken zwischen den Segmenten 8 greift.

An den oberen Enden der Aufzüge 10 sitzen nach außen ragende Haken 11. An den Oberkanten der Aufzüge 8 sind Rillen 12 ausgebildet. Wie in den Fig. 5 und 6 dargestellt, ist umlaufend immer abwechselnd unter die Haken 11 und über die Rillen 12 ein Band 13 gelegt, das an seinen Enden bei 14 an der Sohle 9 mit nicht dargestellten Mitteln befestigt ist. Das Band 13 ist aus ausreichend zugfestem, gegebenenfalls etwas elastischem Material ausgebildet und hält die Sohle 9 formschlüssig an den Segmenten 8, also am Huf in lotrechter Richtung fest. In Umfangsrichtung sorgt der Formschlußeingriff der Aufzüge 10 zwischen den Segmenten 8 für eine Verdrehsicherung, die bei den gefährlichen Drehbewegungen des Pferdes unter Belastung auf dem Huf das Abreißen der Sohle 9 verhindert.

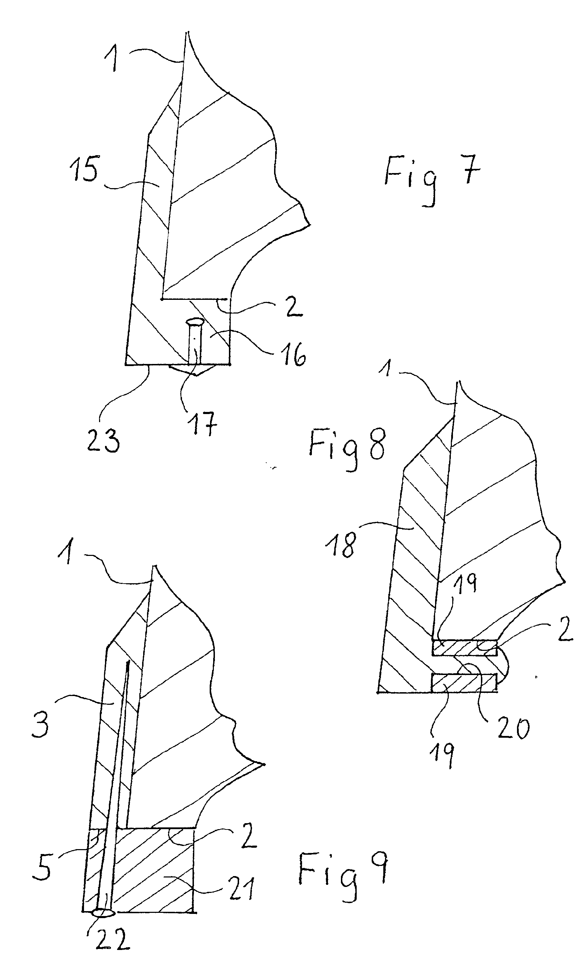

Fig. 7 zeigt eine weitere Ausführungsform, bei der eine Schicht 15 entsprechend der Schicht 3 der Ausführungsform der Fig. 1 und 2 auf der Außenfläche 1 der Hornwand angegossen ist. Bei dieser Ausführungsform erstreckt sich die Schicht 15 bis unter den Sohlenrand 2 und bildet dort eine integral mit der Schicht 15 ausgebildete Sohle 16 aus.

Im dargestellten Ausführungsbeispiel der Fig. 7 sind in der Sohle 16 Metallstifte 17 eingelassen, die im Ausführungsbeispiel die Aufstandsfläche 23 überragen.

Fig. 8 zeigt eine Ausführungsform ähnlich der Ausführungsform der Fig. 7. Auch hier erstreckt sich eie Schicht 18 bis unter den Sohlenrand 2 des Hufes, ist dort aber mit einem gesondert angeordneten Sohlenkörper 19 durch Verguß formschlüssig verbunden. Der Sohlenkörper 19 weist Durchbrechungen 20 auf, durch die das Material der Schicht 18 beim Aufgießen zu sicherer formschlüssiger Verbindung hindurchfließen kann, wie in Fig. 8 dargestellt. Das Material des Sohlenkörpers 19 kann besonders abriebfest gewählt werden, beispielsweise aus geeignetem Kunststoff oder auch aus Metall.

Fig. 9 zeigt eine Ausführungsform mit der Schicht 3 der Fig. 1 bis 2, wobei das Material der Schicht 3 in diesem Fall auch weniger abriebfest ausgebildet sein kann. Es ist hier ein herkömmliches Hufeisen 21 aus Metall vorgesehen, das in seiner Breite den Sohlenrand 2 und die Unterkante 5 der Schicht 3 abdeckend ausgebildet ist. Mit konventionellen Hufnägeln 22 ist das Hufeisen 21 genagelt, jedoch nicht, wie bisher üblich, in den Huf hinein, sondern in die Schicht 3 hinein, wie dies Fig. 9 zeigt. Auf diese Weise läßt sich ein konventionelles Hufeisen ohne jede Verletzungsgefahr für das Pferd verwenden.

Bei längerem Gebrauch der dargestellten Ausführungsformen des Laufschutzes ist zu beachten, daß die Hornwand des Pferdes allmählich nach unten wächst in Richtung der in Fig. 3 eingezeichneten Pfeile. Bei einem ohne Laufschutz in natürlicher Umgebung sich bewegenden Pferd, das also nicht zu hohen Laufbelastungen durch einen Reiter auf längeren Strecken oder auf hartem Untergrund ausgesetzt ist, hält sich der Abrieb am Sohlenrand 2 und die Wachstumsgeschwindigkeit in Richtung der Pfeile in Fig. 3 in einem Gleichgewicht. Bei den Ausführungsformen der Fig. 1 bis 5 wird dieses Gleichgewicht auch bei höherer Laufbelastung, also bei stärkerem Abrieb, beibehalten. Die Schicht 3 bzw. die Segmente 7 wachsen allmählich mit der Hornwand nach unten und werden dabei abgelaufen. Erst nach längerer Zeit ist eine Neubeschichtung erforderlich.

Bei der Ausführungsform der Fig. 5 und 6 sowie der Fig. 9 findet am Sohlenrand 2 des Hufes kein Abrieb statt. Die Hornwand wächs also allmählich zu weit nach unten und muß von Zeit zu Zeit zurückgeschnitten werden. Dazu wird die Sohle 9 bzw. das Hufeisen 21 abgenommen. Der Sohlenrand 2 wird beschnitten und die Sohle 9 oder das Hufeisen 21 können wieder angesetzt werden. Auch hier muß erst nach mehrmaligem Zurückschneiden die Beschichtung erneuert werden, müssen also dann wieder neue Segmente 8 bzw. eine neue Schicht 3 aufgebracht werden.

Bei den Ausführungsformen der Fig. 7 und 8, bei denen ebenfalls kein Abrieb am Sohlenrand 2 erfolgt, muß ebenfalls zum Wiederherstellen der ursprünglichen Hufform von Zeit zu Zeit der Sohlenrand 2 beschnitten werden. Dazu muß unter diesem die Sohle 16 gemäß Fig. 7 bzw. der Sohlenkörper 19 gemäß Fig. 8 entfernt werden und kann, solange die Schicht 15 bzw. 18 noch in ausreichender Höhe vorhanden ist, an diese wieder durch Angießen von Material angeformt werden.

Bei den dargestellten Ausführungsformen sind eine Reihe zusätzlicher Varianten möglich. So kann beispielsweise die Schicht 3 gemäß den Fig. 1 und 2 bzw. können die Segmente 7 gemäß den Fig. 3 und 4 in ihrer Höhe wesentlich kürzer ausgebildet sein. Dadurch verringert sich das Gewicht der Konstruktion. Es ist jedoch häufigeres Neuangießen erforderlich.

Bei der Ausführungsform der Fig. 5 und 6 kann die lotrechte Formschlußverbindung zwischen der Sohle 9 und den Segmenten 8 auch auf andere als die dargestellte Weise erzielt werden, beispielsweise durch direkte seitliche Verzahnung der Aufzüge 10 mit den Segmenten 8 oder beispielsweise durch sonstige Verbindung der Aufzüge 8 mit den Segmenten 7, z.B. durch Verschraubung, Verkeilung od. dgl.

## Patentansprüche

1. Laufschutz für Pferdehufe, mit einer auf der Außenfläche (1) der Hornwand des Hufes befestigten Kunststoffschicht (3, 7, 8, 15, 18), **dadurch gekennzeichnet, daß** die Kunststoffschicht (3, 7, 8, 15, 18) aus einem Material besteht, das aus mehreren Komponenten gemischt auf der Außenfläche (1) in fester Verbindung formsteif aushärtet, wobei die Schicht (3, 7, 8, 15, 18) wenigstens über die vordere Hälfte des Umfanges der Außenfläche (1) umlaufend mit einer Schichtdicke von 2 bis 20 mm ausgebildet ist.

2. Laufschutz nach Anspruch 1, **dadurch gekennzeichnet, daß** die Schichtdicke 4 bis 10 mm beträgt.

3. Laufschutz nach Anspruch 1, **dadurch gekennzeichnet, daß** die Schichtdicke über die Höhenerstreckung der Schicht (3, 7, 8, 15, 18) im wesentlichen konstant ist.

4. Laufschutz nach Anspruch 1, **dadurch gekennzeichnet, daß** die Schicht in umfangsbeabstandete Segmente (7, 8) unterteilt ist.

5. Laufschutz nach Anspruch 1, **dadurch gekennzeichnet, daß** die Schicht (3, 7) aus einem Material besteht, dessen Abriebfestigkeit etwa der des Hornmateriales des Hufes entspricht, und mit ihrer Unterkante (5) bis wenigstens an die Unterkante (2) der Hornwand reicht.

6. Laufschutz nach Anspruch 1, **dadurch gekennzeichnet, daß** die Schicht (8, 18) mit einer unter dem Huf angeordneten Sohle (9, 19) in lotrechter haltender Formschlußverbindung steht.

7. Laufschutz nach Anspruch 6, **dadurch gekennzeichnet, daß** die Formschlußverbindung (11, 12, 13) lösbar ausgebildet ist.

8. Laufschutz nach den Ansprüchen 4 und 7, **dadurch gekennzeichnet, daß** die Kunststoffsohle (9) mit nach oben ragenden Aufzügen (10) in Umfangsformschluß zwischen die Segmente (8) greift.

9. Laufschutz nach Anspruch 1, **dadurch gekennzeichnet, daß** die Schicht (15) einstückig unter die Hufsohle greifend eine Kunststoffsohle (16) ausbildet.

10. Laufschutz nach einem der vorhergehenden Ansprüche, **dadurch gekennzeichnet, daß** der Laufschutz mit eingebetteten, bis wenigstens in seine Aufstandsfläche (5, 23) ragenden Metallstiften (6, 17) versehen ist.

11. Laufschutz nach Anspruch 1, **dadurch gekennzeichnet, daß** ein Hufeisen (21) durch in die Schicht (3) getriebene Hufnägel (22) unter dem Huf gehalten ist.

## Claims

1. Ambulation-protection means for equine hoofs, comprising a plastic layer (3, 7, 8, 15, 18) affixed to the outside surface (1) of the hoof,
**characterized in that**
the plastic layer (3, 7, 8, 15, 18) is a material composed of several mixed components and hardens on and firmly fastens onto the outside surface (1) in dimensionally rigid form, the layer (3, 7, 8, 15, 18) being of a thickness of 2 to 20 mm and extending peripherally at least over the front half of the periphery of the outside surface (1).

2. Ambulation-protection means as claimed in claim 1, **characterized in that** the layer thickness is 4 to 10 mm.

3. Ambulation-protection means as claimed in claim 1, **characterized in that** the layer thickness over the height of the layer (3, 7, 8, 15, 18) is substantially constant.

4. Ambulation-protection means as claimed in claim 1, **characterized in that** the layer is sub-divided into peripherally spaced segments (7, 8).

5. Ambulation-protection means as claimed in claim 1, **characterized in that** the layer (3, 7) is a material of which the abrasion resistance approximately corresponds to that of the hoof's horn material and that it extends by its lower edge (5) at least as far as the lower edge (2) of the horn wall.

6. Ambulation-protection means as claimed in claim 1, **characterized in that** the layer (8, 18) is geometrically locked to a sole (9, 19) in a vertically binding connection.

7. Ambulation-protection means as claimed in claim 6, **characterized in that** the geometric lock (11, 12, 13) is detachable.

8. Ambulation-protection means as claimed in claims 4 and 7, **characterized in that** the plastic sole (9) engages by means of elevations (10) between the segments (8) to form a peripheral geometric locking means.

9. Ambulation-protection means as claimed in claim 1, **characterized in that** the layer (15) integrally forms a plastic sole (16) passing underneath the hoof sole.

10. Ambulation-protection means as claimed in one of the claims, **characterized in that** said means is fitted with metal pins or studs (6, 17) reaching at least as far as said means' ground-contacting surface (5, 23).

11. Ambulation-protection means as claimed in claim 1, **characterized in that** a metal horseshoe (21) is held in place under the hoof by horseshoe nails (22) driven through the layer (3).

## Revendications

1. Protection de sabot pour chevaux, composé d'une couche en matière synthétique (3, 7, 8, 15, 18), fixée extérieurement sur la paroi du sabot (1), **caractérisé en ce que** la couche de matière synthétique (3, 7, 8, 15, 18) consiste en une substance mélangée de plusieurs composants durcissant rigidement sur la paroi extérieure du sabot (1), ainsi que au moins la moitié avant du pourtour de la surface extérieure (1) est couvert d'une couche (3, 7, 8, 15, 18) d'une épaisseur de 2 à 20 mm.

2. Protection de sabot selon la revendication 1, **caractérisé en ce que** l'épaisseur varie entre 4 à 10 mm.

3. Protection de sabot selon les revendications 1 et 2, **caractérisé en ce que** l'épaisseur de la couche (3, 7, 8, 15, 18) est plus ou moins constante sur toute son étendu en hauteur.

4. Protection de sabot selon la revendication 1, **caractérisé en ce que** la couche est compartimenté au segment à distance (7, 8) du pourtour.

5. Protection de sabot selon la revendication 1, **caractérisé en ce que** la couche (3, 7) consiste en une matière synthétique qui en sa résistance à l'abrasion est comparable à celle de la corne du sabot, et qui avec son bord inférieur (5) s'étend au moins jusque au bord inférieur du sabot (2).

6. Protection de sabot selon la revendication 1, **caractérisé en ce que** la couche (8, 18) est fixée rigidement et perpendiculairement avec une semelle (9, 19).

7. Protection de sabot selon la revendication 6, **caractérisé en ce que** la liaison de fermeture du moule (11, 12, 13) est formée tel qu'il est détachable.

8. Protection de sabot selon les revendications 4 und 7, **caractérisé en ce que** la semelle en matière synthétique (9) s'emboîte avec des bretelles verticales (10) l'élevant entre les segments (8) fermant ainsi le moule.

9. Protection de sabot selon la revendication 1, **caractérisé en ce que** la couche (15) forme une semelle (16) s'attachant sous le sabot d'une seule pièce.

10. Protection de sabot selon une des revendications précédentes, **caractérisé en ce que** la protection de sabot est munie de tiges métalliques (6, 17) enrobées dans la semelle et sortant au moins de la surface extérieur de la semelle (5, 23).

11. Protection de sabot selon la revendication 1, **caractérisé en ce qu'**un fer à cheval (21) est fixé sous le sabot par des clous (22) traversant la couche de protection (3).
